# EUROPÄISCHE PATENTSCHRIFT

(11) **EP 1 460 386 B1**
(45) Veröffentlichungstag und Bekanntmachung des Hinweises auf die Patenterteilung: **02.01.2013**
(21) Anmeldenummer: 04000683.5
(22) Anmeldetag: 15.01.2004
(51) Int. Cl.: G01D 5/20

(54) **Schaltungsanordnung für induktiv arbeitende Sensoren und Verfahren zum Betrieb derselben**
Circuit for inductive sensors and method for its use
Circuit pour des capteurs inductifs et méthode d'utilisation

(30) Priorität: 06.02.2003 DE 10305788
(43) Veröffentlichungstag der Anmeldung: 22.09.2004
(73) Patentinhaber: E.G.O. ELEKTRO-GERÄTEBAU GmbH, 75038 Oberderdingen (DE)
(72) Erfinder: Knappe, Gerd, 75015 Bretten (DE); Perrin, Wilhelm, 76199 Karlsruhe (DE)
(74) Vertreter: Patentanwälte Ruff, Wilhelm, Beier, Dauster & Partner

(56) Entgegenhaltungen:
- EP-A- 1 049 358
- FR-A- 2 763 116
- US-A- 3 943 339
- US-A- 5 893 996
- PATENT ABSTRACTS OF JAPAN Bd. 018, Nr. 280 (E-1555), 27. Mai 1994 (1994-05-27) & JP 06 053801 A (ASUTETSUKUSU KK; others: 01), 25. Februar 1994 (1994-02-25)

## Beschreibung

Die Erfindung betrifft ein Verfahren zum Betrieb einer Schaltungsanordnung für mehrere induktiv arbeitende Sensoren.

Es sind Topferkennungssysteme bekannt mit induktiv arbeitenden Sensoren, sogenannten TE-Sensoren. Derartige TE-Sensoren samt Ansteuerung sind beispielsweise in der EP 442 275 A1 und der EP 469 189 A1 beschrieben. Die Ansteuerung solcher TE-Sensoren ist, auch beim vorgenannten Stand der Technik, relativ aufwendig, was unter anderem die weitere Verbreitung dieser TE-Sensoren beispielsweise bei Kochfeldern noch behindert.

In vielen Fällen beträgt die Frequenzänderung beispielsweise bei einem TE-System bei Aufstellen eines Topfes ca. 3% bis 5%. Wird nun die Schwingkreisfrequenz durch Überkoppeln um etwa diesen Bereich verschoben, so ist eine eindeutige und sichere Topferkennung nicht mehr gewährleistet.

Die EP 1 049 358 A2 beschreibt eine Schaltungsanordnung sowie ein Verfahren zum Betrieb einer Schaltungsanordnung mit einem Topferkennungs-Sensor in Form einer Leiterschleife. Diese läuft in einer Randisolierung eines Strahlungsheizkörpers um. Eine Auswertung des Signals der Leiterschleife weist Operationsverstärker auf sowie eine Schwingkreiskapazität parallel zur Leiterschleife.

Die JP 06-053801 A beschreibt allgemein eine Multiplex-Schaltung für Sensoren. Als Schaltmittel ist darin ein MOSFET beschrieben.

### Aufgabe und Lösung

Der Erfindung liegt die Aufgabe zugrunde, ein eingangs genanntes Verfahren zum Betrieb einer Schaltungsanordnung zu schaffen, mit dem die Probleme des Standes der Technik vermieden werden können und insbesondere der Aufwand für eine Ansteuerung von TE-Sensoren, insbesondere mehrerer TE-Sensoren mit einer einzigen Schaltungsanordnung, reduziert werden kann.

Gelöst wird diese Aufgabe durch ein Verfahren mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist eine Schaltungsanordnung für induktiv arbeitende Sensoren Ansteuerungsmittel und Auswertungsmittel für die Sensoren sowie die zugehörigen Sensorsignale auf. Mittels elektronischer Schaltmittel werden die Ansteuerungsmittel und die Auswertungsmittel an jeweils einen Sensor verbunden, quasi nach einer Art Multiplex-Betrieb. Erfindungsgemäß wird als Schaltmittel ein MOSFET verwendet, welcher einen geringen Drain-Source-Widerstand aufweist.

Es hat sich im Rahmen der Erfindung gezeigt, dass durch die Verwendung eines MOSFET's mit einem solchen geringen Drain-Source-Widerstand beispielsweise ein Überkoppeln zwischen Zuleitungen zu verschiedenen Sensoren reduzieren bzw. sogar ganz vermeiden lässt. Dies verbessert die Funktion solcher Sensoren stark, beispielsweise bei TE-Systemen. Hier wird nämlich eine hohe Erkennungssicherheit gefordert, da ansonsten bei nicht aufgestelltem Topf eine Kochstelle nicht funktioniert, was ein Bediener nicht akzeptiert. Des weiteren muss nach dem Herunternehmen eines Topfes von einer Kochstelle dies erkannt und die Kochstelle abgeschaltet werden, da sie ansonsten im Leerlaufbetrieb weiterbetrieben wird. Dies hätte Energieverschwendung sowie Unfallgefahr zur Folge. Des weiteren kann mit einem erfindungsgemäßen Schaltmittel bzw. MOSFET eine EMV-Prüfung besser bestanden werden.

In weiterer Ausgestaltung der Erfindung kann vorgesehen sein, dass pro Sensor genau ein Schaltmittel vorgesehen ist. Dies verbessert die Ansteuerbarkeit der einzelnen Sensoren.

Die Schaltungsanordnung kann Schwingkreiskapazitäten aufweisen, welche parallel zu einem Topferkennungssensor geschaltet sind für dessen Betrieb. Dies bedeutet, dass von einer Anzahl von Sensoren jeweils ein Sensor mittels der Schaltmittel an die Schwingkreiskapazität geschaltet wird zur Erzeugung der Messfrequenz und gleichzeitig dieser Sensor ausgewertet wird. Somit wird auch die Schwingkreiskapazität quasi in den Multiplex-Betrieb eingeschlossen.

Bei der Erfindung wird eine zweite Schwingkreiskapazität parallel zu der ersten Schwingkreiskapazität geschaltet. Dadurch wird eine zweite Messfrequenz erzeugt. Dies ermöglicht es, HF-Störungen besser zu erkennen und zu vermeiden, da diese die Topferkennung stören. Dies ist vor allem von Vorteil, wenn die HF-Störung keine konstante, sondern eine sich verändernde Frequenz aufweist und möglicherweise beide oder alle Messfrequenzen zu unterschiedlichen Zeitpunkten stört. So kann immer noch mit hoher Sicherheit das Vorhandensein eines Topfes erkannt werden. Dabei sollte zwischen den verschiedenen Messfrequenzen ein gewisser Unterschied liegen, beispielsweise zwischen ungefähr 5% und 10%.

Vorteilhaft wird die Erfindung eingesetzt für TE-Sensoren in einem Kochfeld. Die Sensoren können dabei eine Schleife aus einem Draht mit wenigen Windungen sein. Vorteilhaft ist der Sensor eigenstabil, wobei er insbesondere eine einzige stabile Drahtschleife sein kann. Ein derartiger TE-Sensor ist in der EP 982 973 A2 offenbart, deren Inhalt diesbezüglich durch ausdrückliche Bezugnahme zum Inhalt der vorliegenden Anmeldung gemacht wird.

Bei einem erfindungsgemäßen Verfahren zum Betrieb einer vorgenannten Schaltungsanordnung mit den Merkmalen des Anspruchs 2 kann die Gate-Steuerspannung an dem MOSFET nachgeregelt werden. So ist es möglich, eine Frequenz zu erzeugen, welche über wechselnde Temperatur konstant ist. Dadurch ist es vorteilhaft möglich, veränderliche Umgebungstemperaturen, beispielsweise auch durch den Betrieb von Heizeinrichtungen eines Kochfeldes, auszublenden.

Bei einer vorgenannten Messung mit zwei Messfrequenzen erfolgt über viele Messungen hinweg eine Mittelwertbildung. Anhand dieser wird eine Wahrscheinlichkeit errechnet, ob ein Objekt, welches von dem Sensor erfasst werden soll, vorhanden ist bzw. ob ein Topf vorhanden ist bei einem TE-Sensor. Hierzu können entsprechende Algorithmen oder Wahrscheinlichkeitswerte in einer Steuerung oder einem dazugehörigen Speicher abgelegt sein.

Des weiteren ist es erfindungsgemäß vorgesehen, die erste Schwingkreiskapazität und die zweite Schwingkreiskapazität unterschiedlich groß auszuwählen. Hier sind jedoch viele Gestaltungsmöglichkeiten offen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnung

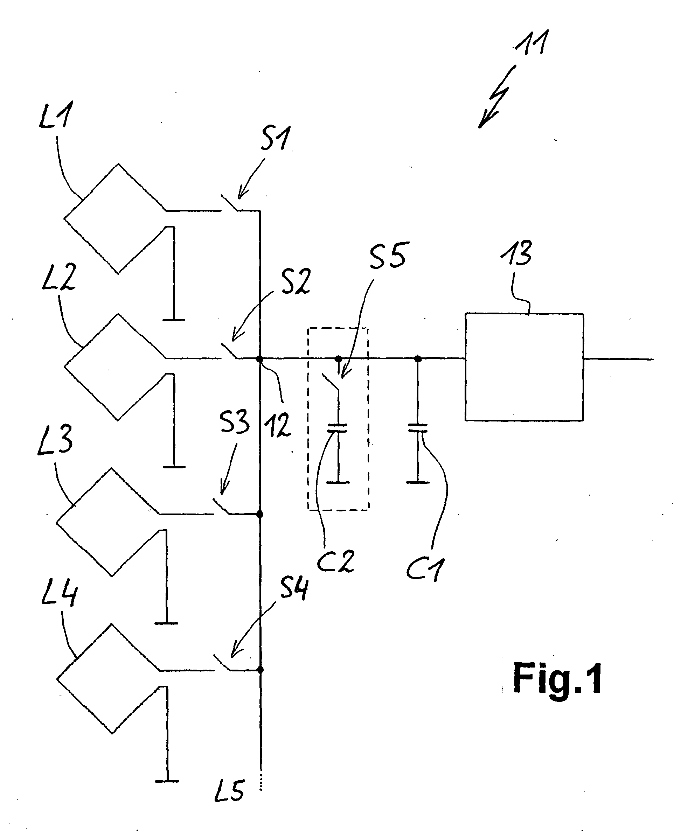

Ein Ausführungsbeispiel der Erfindung ist in der Zeichnung dargestellt und wird im folgenden näher erläutert, wobei Fig. 1 stark schematisiert ein Blockschaltbild mit vier TE-Sensoren, jeweils Schaltmitteln und zwei Schwingkreiskapazitäten zeigt.

### Detaillierte Beschreibung des Ausführungsbeispiels

In Fig. 1 ist eine Schaltungsanordnung 11 dargestellt, wie sie beispielsweise für ein TE-System verwendet werden kann. Die Schaltung 11 weist vier Spulen L1 bis L4 auf, es könnten auch mehr sein. Diese Spulen L arbeiten als TE-Sensoren, wie eingangs beschrieben.

Die Spulen L1 bis L4 sind jeweils über einen Schalter S1 bis S4 mit einem gemeinsamen Schaltungsknoten 12 verbunden. Der Schaltungsknoten 12 ist einerseits mit einer Oszillatorgrundschaltung 13 verbunden, welche zur Erzeugung der Schwingkreisfrequenz dient. Des weiteren ist eine Schwingkreiskapazität C1 vorgesehen, welche jeweils zusammen mit einer Spule L einen Parallelschwingkreis aus der Induktivität der Spule und der Schwingkreiskapazität bildet. Dazu wird nach Art eines Multiplex-Betriebes jeweils eine Spule L mittels des entsprechenden Schalters S an den Schaltungsknoten 12 verbunden. Die anderen Schalter S sind dabei geöffnet und die entsprechenden Spulen L abgetrennt. Von der Oszillatorgrundschaltung 13 geht dann ein Signal ab an eine weitere Auswertung der Schwingkreisfrequenz dahingehend, ob sich diese derart geändert hat, dass zu vermuten ist, dass ein Topf von dem Sensor der Spule L erfasst ist.

In dem gestrichelten Bereich ist dargestellt, wie eine zweite Schwingkreiskapazität C2 mit einem weiteren Schalter S5 parallel zur ersten Schwingkreiskapazität C1 geschaltet werden kann. Dies ist vorstehend erläutert worden.

Die Schalter S1 bis S4 der jeweiligen Spulen L sowie der Schalter S5 der zweiten Schwingkreiskapazität C2 werden über eine separate, nicht näher dargestellte Schaltung angesteuert zum vorerwähnten Multiplex-Betrieb. Wie zuvor erläutert worden ist, sind die Schalter S1 bis S4 für die Spulen L MOSFETs. Diese weisen erfindungsgemäß einen geringen Drain-Source-Widerstand auf.

Eine Messfrequenz kann in einem Bereich von einigen wenigen MHz liegen, beispielsweise ca. 2,5 MHz bis 4 MHz.

## Patentansprüche

1. Verfahren zum Betrieb einer Schaltungsanordnung für mehrere induktiv arbeitende Sensoren (L), mit Ansteuerungsmitteln (13) und Auswertungsmitteln für die Sensoren (L) und die Sensorsignale, wobei mittels elektronischer Schaltmittel (S1 - S4) die Ansteuerungsmittel und die Auswertungsmittel an jeweils einen Sensor (L) verbunden werden, wobei jedes Schaltmittel ein MOSFET (S1 - S4) mit geringem Drain-Source-Widerstand ist, **dadurch gekennzeichnet, dass** mit zwei Messfrequenzen gemessen wird, wobei durch Mittelwertbildung über viele Messungen eine Wahrscheinlichkeit errechnet wird, anhand derer bestimmbar ist, ob ein Topf vorhanden ist oder nicht, wobei zwei verschiedene Kapazitäten (C1, C2) als Schwingkreiskapazitäten parallel geschaltet werden zu einem Sensor (L) und mit verschiedenen Messfrequenzen betrieben werden.

2. Verfahren nach Anspruch 1, **dadurch gekennzeichnet, dass** eine Gate-Steuerspannung an jedem MOSFET (S1 - S4) anliegt und nachgeregelt wird, so dass sich eine Frequenz ergibt, die über die Temperatur konstant ist.

3. Verfahren nach Anspruch 1 oder 2, **dadurch gekennzeichnet, dass** pro Sensor (L) genau ein Schaltmittel (S1 - S4) vorgesehen ist.

4. Schaltungsanordnung nach Anspruch 1, 2 oder 3, **dadurch gekennzeichnet, dass** die Schaltungsanordnung (11) Schwingkreiskapazitäten (C) aufweist, wobei eine einzige Schwingkreiskapazität (C1) mittels der Schaltmittel (S1 - S4) parallel zu jeweils allen Sensoren (L) schaltbar ist zur Erzeugung einer Messfrequenz.

5. Verfahren nach Anspruch 4, **gekennzeichnet durch** eine zweite Schwingkreiskapazität (C2) parallel zu der ersten Schwingkreiskapazität (C), wobei die verschiedenen Schwingkreiskapazitäten mit Schaltern (S1 - S4) zu- und abschaltbar sind, und vorzugsweise einen Unterschied von mindestens 8% zwischen den Messfrequenzen erzeugen.

6. Verfahren nach einem der vorhergehenden Ansprüche, **dadurch gekennzeichnet, dass** die Sensoren (L) Topferkennungs-Sensoren sind in einem Kochfeld, wobei vorzugsweise ein Sensor eine Schleife aus einem Draht mit wenigen Windungen, insbesondere nur einer einzigen eigenstabilen Windung, ist.

## Claims

1. A method for operating a circuit arrangement with several inductively operating sensors (L), having control means (13) and evaluating means for the sensors (L) and the sensor signals, wherein by means of electronic switching means (S1 - S4) the control means and the evaluating means are connected to in each case one said sensor (L), wherein each switching means comprises a MOSFET (S1 - S4) with a low drain-source resistance, **characterized in that** measuring is with two measuring frequencies, wherein by averaging over numerous measurements a probability is calculated and by means thereof may be determined whether or not a saucepan is present, wherein two different capacitances (C1, C2) are connected in parallel to one said sensor (L) as resonant circuit capacitances and are operated with different measuring frequencies.

2. The method according to claim 1, **characterized in that** a gate control voltage is applied to each MOSFET (S1 - S4) and is readjusted so as to give a frequency which is constant with varying temperature.

3. The method according to claim 1 or 2, **characterized in that** precisely one switching means (S1 - S4) is provided per sensor (L).

4. The method according to claim 1, 2 or 3, **characterized in that** the circuit arrangement (11) has resonant circuit capacitances (C), one said single resonant circuit capacitance (C1) being connectable by said switching means (S1 - S4) parallel to in each case all said sensors (L) for producing a measuring frequency.

5. The method according to claim 4, **characterized in that** a second resonant circuit capacitance (C2) is parallel to said first resonant circuit capacitance (C), and switches (S1-S4) are provided in order to switch on and off said different resonant circuit capacitances, and preferably produce a difference of at least 8 % between measuring frequencies.

6. The method according to any of the preceding claims, **characterized in that** the sensors (L) are pot or saucepan detection sensors in a cooking zone, preferably said sensor is a loop made of a wire having a few turns, in particular not more than one single inherently stable turn.

## Revendications

1. Procédé pour faire fonctionner un système de circuit pour plusieurs capteurs inductifs (L), comprenant des moyens de commande (13) et d'analyse pour les capteurs (L) et les signaux de capteurs, les moyens de commande et les moyens d'analyse étant raccordés à un capteur (L) respectif par le biais de moyens de commutation électroniques (S1 - S4), chaque moyen de commutation étant un MOSFET (S1 - S4) avec une faible résistance drain-source, **caractérisé en ce que** la mesure est effectuée avec deux fréquences de mesure, une probabilité étant obtenue à partir du calcul d'une valeur moyenne à partir de plusieurs mesures, ladite probabilité permettant de déterminer si un pot de cuisson est présent ou non, deux capacités différentes (C1, C2) étant montées en parallèle en tant que capacités de circuit oscillant pour former un capteur (L) et fonctionnant avec des fréquences de mesure différentes.

2. Procédé selon la revendication 1, **caractérisé en ce qu'**une tension de commande de grille s'applique à chaque MOSFET (S1 - S4) et est ajustée, de sorte que l'on obtienne une fréquence qui est constante sur la température.

3. Procédé selon la revendication 1 ou 2, **caractérisé en ce que** l'on prévoit exactement un moyen de commutation (S1 - S4) par capteur (L).

4. Système de circuit selon la revendication 1, 2 ou 3, **caractérisé en ce que** le système de circuit (11) présente des capacités de circuit oscillant (C), une capacité de circuit oscillant unique (C1) pouvant être montée en parallèle avec tous les capteurs (L) respectifs à l'aide des moyens de commutation (S1 - S4), en vue de produire une fréquence de mesure.

5. Procédé selon la revendication 4, **caractérisé par** une deuxième capacité de circuit oscillant (C2) parallèle à la première capacité de circuit oscillant (C), les différentes capacités de circuit oscillant pouvant être connectées et déconnectées avec les commutateurs (S1 - S4), et de préférence produisant une différence d'au moins 8 % entre les fréquences de mesure.

6. Procédé selon l'une quelconque des revendications précédentes, **caractérisé en ce que** les capteurs (L) sont des capteurs de détection de pot de cuisson dans un champ de cuisson, un capteur étant de préférence une boucle en fil métallique avec peu d'enroulements, notamment seulement un seul enroulement autostable.
